# DEMANDE DE BREVET EUROPEEN

(11) **EP 2 541 076 A1**
(43) Date de publication de la demande: **02.01.2013**
(21) Numéro de dépôt: 12162116.3
(22) Date de dépôt: 29.03.2012
(51) Int. Cl.: F16B 13/12

(54) **Dispositif de fixation rapide d'une pièce sur un support**

(30) Priorité: 30.06.2011 FR 1155888
(71) Demandeur: Amphenol Air LB, 08110 Blagny (FR)
(72) Inventeur: Devouge, Laurent, 08370 Margut (FR)
(74) Mandataire: Delprat, Olivier

(57) **Abrégé**

Dispositif de fixation d'une pièce (C) sur un support (S), comprenant une douille (2, 200) destinée à venir s'engager dans des orifices coaxiaux pratiqués dans la pièce (C) et dans le support (S), et une tige de verrouillage (1, 100) axialement déplaçable dans la douille (2, 200) entre une position de préassemblage du dispositif et une position active de verrouillage dans laquelle la tige de verrouillage (1, 100) déforme latéralement la douille (2, 200), la tige de verrouillage (1, 100) et la douille (2, 200) comprenant des butées complémentaires aptes à maintenir la tige de verrouillage (1, 100) dans la douille (2, 200) en position de préassemblage.

## Description

L'invention concerne la fixation d'une pièce sur un support et plus particulièrement un dispositif de fixation rapide d'une pièce sur un support via des orifices coaxiaux pratiqués dans la pièce et le support.

Elle concerne, dans une application particulièrement intéressante, la fixation de câble sur la structure interne d'un aéronef.

Dans les engins aérospatiaux, les câbles électriques sont généralement assemblés en torons et sont maintenus fixés sur un support tel qu'un rail. Ces câbles sont généralement maintenus par une pluralité de colliers de serrage qui sont ensuite fixés au support.

Pour fixer ces colliers de serrage au support, on utilise par exemple des boulons voire des moyens de clipsage. Ces pièces multiples utilisées pour la fixation ne permettent pas une fixation des plus simples. Par ailleurs, le vissage nécessaire à la fixation allonge le temps de fixation.

Les éléments de fixation à boulons sont généralement réalisés en métal, voire en titane et sont donc inappropriées en raison de leur poids et des problèmes de corrosion, en ce qui concerne le métal.

Les systèmes de fixation par clipsage utilisent des pions plastiques de forme conique enfichés en force dans des orifices coaxiaux pratiqués dans la pièce et le support. Cependant, ces pions ne peuvent être retirés sans dégrader le support. En effet, après montage, les pions appliquent une force latérale sur le support et sur la pièce, et entraînent généralement une déformation de la pièce au niveau de l'orifice.

Un but de l'invention est donc de pallier ces différents inconvénients en proposant un dispositif de fixation simplifiant l'installation.

Un autre but est de proposer un dispositif allégé par rapport aux systèmes conventionnels.

Un autre but de l'invention est de proposer un dispositif de fixation évitant une déformation de la pièce fixée au support.

Selon un aspect, il est proposé, dans un mode de réalisation, un dispositif de fixation d'une pièce sur un support comprenant une douille destinée à venir s'engager dans des orifices coaxiaux pratiqués dans la pièce et dans le support, et une tige de verrouillage axialement déplaçable dans la douille entre une position de préassemblage du dispositif et une position active de verrouillage dans laquelle la tige de verrouillage déforme latéralement la douille.

Selon une caractéristique générale, la tige de verrouillage et la douille comprennent des butées complémentaires aptes à maintenir la tige de verrouillage dans la douille en position de préassemblage.

Les butées complémentaires maintenant la tige de verrouillage dans la douille permettent de disposer d'une seule pièce composée de deux éléments indissociables. En effet, une fois la tige de verrouillage engagée dans la douille dans la position de préassemblage, il n'est plus possible de désengager la tige de verrouillage de la douille. On obtient ainsi un dispositif de fixation prêt à l'emploi comportant deux éléments préassemblés. Ainsi, le dispositif de fixation permet de simplifier l'installation en réduisant le nombre de pièces séparées.

Avantageusement, la tige de verrouillage et la douille peuvent être réalisées en matériau thermoplastique.

La réalisation du dispositif de fixation en matériau thermoplastique permet, d'une part, d'alléger le dispositif, et d'autre part, de réduire les problèmes de corrosion. En effet, la masse du dispositif est réduite d'environ 75% lorsqu'elle est réalisée en matériau thermoplastique par rapport à un dispositif de fixation réalisé en métal et d'environ 50% par rapport à un dispositif de fixation réalisé en titane.

Le dispositif de fixation est de préférence réalisé dans un matériau thermoplastique apte à résister à des hautes températures comprises entre -55°C et 260°C.

De préférence, la tige de verrouillage comprend au moins un logement dans lequel s'encliquette une portion d'extrémité libre de la douille lors du préassemblage.

Lors du préassemblage du dispositif, la tige de verrouillage est insérée dans la douille jusqu'à ce que la portion d'extrémité libre de la douille vienne se loger en butée dans les logements. Dans cette position, il n'est plus possible de retirer la tige de verrouillage de la douille. Les butées complémentaires sont toutefois conformées de sorte que seul un déplacement axial de la tige de verrouillage de la position de préassemblage vers la position active de verrouillage soit possible.

L'extrémité libre de la douille est, par exemple, fendue et comprend de préférence trois secteurs radialement déformables venant s'encliqueter lors du préassemblage dans trois logements correspondants pratiqués dans la tige de verrouillage, assurant une position radiale précise.

Les fentes permettent ainsi de partiellement désolidariser les secteurs radialement déformables de la douille. Les secteurs radialement déformables acquièrent ainsi une élasticité permettant l'insertion de la tige de verrouillage dans la douille et leur permettant de revenir à leur position d'origine une fois en face des logements et ainsi de former des butées complémentaires avec lesdits logements.

Les logements peuvent avantageusement être séparés par des parois longitudinales qui s'engagent dans les fentes.

Dans un mode de réalisation, la tige de verrouillage comprend de préférence au moins une nervure d'expansion apte à déformer latéralement la douille dans la position active de verrouillage.

Lorsque la tige de verrouillage est déplacée dans la douille de la position de préassemblage vers la position active de verrouillage, la nervure d'expansion déforme latéralement la douille, engendrant une expansion radiale de cette dernière. La tige de verrouillage est ainsi maintenue dans la douille en position active de verrouillage, dans laquelle la pièce est fixée à la structure.

La douille comprend de préférence au moins une rainure de guidage apte à recevoir ladite au moins une nervure d'expansion sans entraîner de déformation latérale de la douille dans la position de préassemblage, la rainure de guidage étant réalisée sur la paroi interne de la douille depuis une extrémité d'entrée de la douille, distincte de l'extrémité libre de la douille.

La tige de verrouillage et la douille peuvent avantageusement comprendre des moyens de rotation complémentaires permettant de faire pivoter ladite au moins une nervure d'expansion lors du déplacement de la tige de verrouillage de la position de préassemblage vers la position active de verrouillage.

Une fois le dispositif de fixation inséré dans les orifices coaxiaux de la pièce et du support, il est maintenu en position active de verrouillage par la déformation latérale de la douille. Cette déformation latérale de la douille se fait dans une zone de déformation située au niveau du support. La rainure de guidage permet de déplacer axialement la nervure d'expansion de la tige de verrouillage librement de la position de préassemblage jusqu'à la position active de verrouillage avant de faire pivoter la tige de verrouillage de manière à amener la nervure d'expansion en contact avec la paroi de la douille et engendrer une déformation latérale de la douille.

La zone de déformation étant au niveau du support, aucune déformation n'est appliquée à la pièce qui est ainsi réutilisable.

Le dispositif de fixation est maintenu dans le support par l'effort d'expansion déformant la douille au niveau de la zone d'expansion située dans l'épaisseur du support. La pièce, quant à elle, est fixée au support par le dispositif de fixation via la tête de la tige de verrouillage et la tête de la douille, la pièce étant comprise entre la tête de la douille et le support.

De plus, lors du déverrouillage de la tige, c'est-à-dire lorsque l'on faite passer la tige de verrouillage de la position active de verrouillage à la position de préassemblage afin de retirer le dispositif de fixation de la pièce, il suffit de faire pivoter la tige de verrouillage jusqu'à ce la nervure d'expansion se situe dans l'axe de la rainure de guidage. Dans cette position la nervure d'expansion n'est plus en contact avec la paroi interne de la douille et la tige de verrouillage peut à nouveau être axialement déplacée.

Les moyens de rotation comprennent de préférence des surfaces hélicoïdales pratiquées dans la tige, d'une part, et dans la douille, d'autre part.

Les surfaces hélicoïdales pratiquées dans la tige offrent des rampes de désengagement de la position active de verrouillage servant à déplacer axialement la tige de verrouillage de la position active de verrouillage vers la position de préassemblage lorsqu'une rotation est appliquée à la tige de verrouillage pour sortir le dispositif de la position active de verrouillage.

Avantageusement, la tige de verrouillage et la douille comprennent des butées complémentaires aptes à bloquer la rotation de la tige de verrouillage dans la position active de verrouillage.

Dans un autre mode de réalisation, la tige de verrouillage comprend un épaulement destiné à coopérer avec une portion de l'extrémité libre de la douille pour maintenir la tige de verrouillage dans la position active de verrouillage.

Une fois la portion de l'extrémité libre de la douille encliquetée dans l'épaulement de la tige de verrouillage, le dispositif ne peut plus être démonté sans être détérioré.

De préférence, la tige de verrouillage comprend au moins une empreinte dimensionnée pour déformer latéralement la portion d'extrémité libre de la douille lorsque la tige de verrouillage est en position active de verrouillage.

Cette empreinte adjacente à l'épaulement est conformée de manière à partiellement recevoir la portion d'extrémité libre de la douille de manière à la déformer latéralement et ainsi exercer une force d'expansion sur le support.

La déformation de la douille est ainsi réalisée au niveau du seul support, maintenant la pièce intacte et libre de toute déformation, ce qui permet de réutiliser la pièce ultérieurement si besoin.

Avantageusement, la tige de verrouillage peut comprendre une nervure d'alignement coopérant avec une rainure d'alignement pratiquée dans la paroi interne de la douille de manière à maintenir en rotation la tige de verrouillage par rapport à la douille lorsque la tige de verrouillage est dans la position de préassemblage.

D'autres avantages et caractéristiques de l'invention apparaîtront à l'examen de la description détaillée de deux modes de réalisation, nullement limitatif, et des dessins annexés, sur lesquels :
- la figure 1 illustre en perspective un dispositif de fixation selon un premier mode de réalisation ;
- les figures 2a et 2b sont des vues en perspective illustrant respectivement un premier mode de réalisation de la tige de verrouillage et de la douille ;
- la figure 3 représente une vue de profil d'un dispositif de fixation selon le premier mode de réalisation ;
- les figures 4 à 6 représentent des vues en coupe de la figure 3, respectivement selon les plans de coupe IV-IV', V-V' et VI-VI' ;
- la figure 7 représente un synoptique de montage et du démontage du dispositif de fixation de la figure 1 ;
- la figure 8 illustre en perspective un dispositif de fixation selon un second mode de réalisation ;
- les figures 9a et 9b sont des vues en perspective illustrant respectivement un second mode de réalisation de la tige de verrouillage et de la douille ;
- la figure 10 représente une vue en coupe longitudinale du dispositif de fixation des figures 8, 9a et 9b dans la position de préassemblage ;
- la figure 11 représente le dispositif de fixation de la figure 8 en position active de verrouillage.

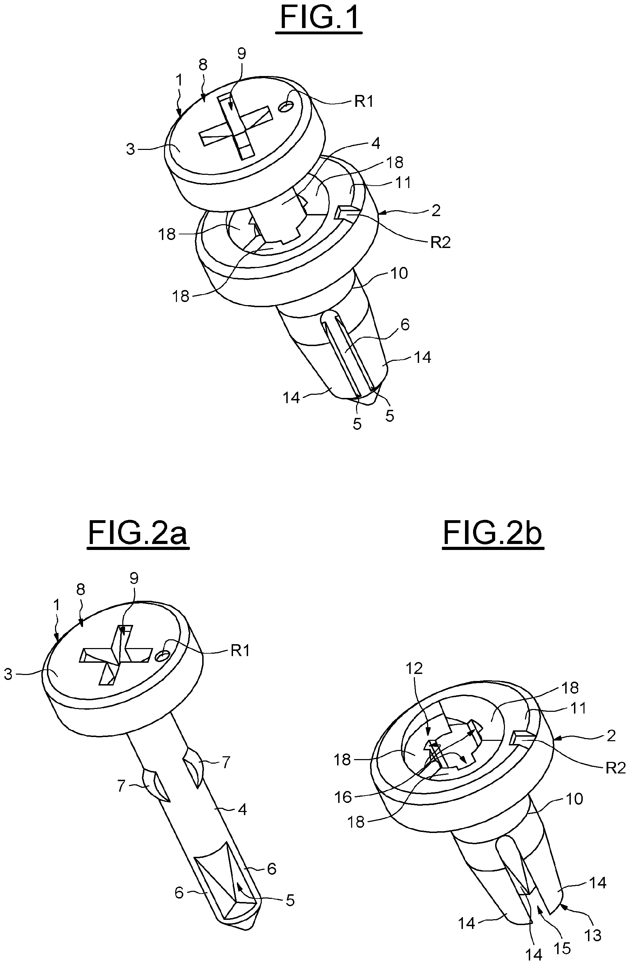

Sur la figure 1 est illustré en perspective un dispositif de fixation selon un premier mode de réalisation. Le dispositif de fixation comprend une tige de verrouillage 1 insérée dans une douille 2 respectivement illustrées séparément sur les figures 2a et 2b. Le dispositif de fixation est représenté sur cette figure dans une position de préassemblage.

Comme cela est illustré sur la figure 2a, dans ce mode de réalisation, la tige de verrouillage 1 comprend une tête 3 et une tige 4 d'étendant depuis la tête 3.

La tige 4 comprend trois logements 5 distribués sur la circonférence de la tige 4 à une extrémité opposée à la tête 3. Les logements 5 sont séparés par des parois longitudinales 6. Sur une portion de la tige 4 située entre les logements 5 et la tête 3, la tige 4 comprend des nervures d'expansion 7, ici au nombre de trois. Dans ce mode de réalisation, les nervures d'expansion 7 sont alignées avec les parois longitudinales 6.

La tête 3 comprend une surface d'appui 8 permettant l'application d'un effort sur la tête 3 pour l'engager dans la douille 2. La tête 3 comprend sur la surface d'appui 8 un évidement 9 ici en forme de croix. Cet évidement est destiné à recevoir un outil permettant de déplacer en rotation la tige de verrouillage 1.

Comme cela est illustré sur la figure 2b, la douille 2 comprend un corps 10 cylindrique et une tête 11 d'extrémité. Cette tête 11 offre une surface d'appui à la tête 3 de la tige de verrouillage 1 lorsque le dispositif de fixation est en position active de verrouillage.

Comme on le voit, la douille 2, y compris la tête 11, est pourvue d'un passage axial 12 destiné à l'insertion de la tige de verrouillage 1.

Le corps 10 de la douille 2 comprend à une extrémité libre 13 opposée à la tête 11. Cette extrémité est fendue et forme entre des fentes 15, trois secteurs 14 radialement déformables. Comme illustré sur la figure 1, les trois secteurs 14 sont conformés de manière à épouser la forme des logements 5 de la tige de verrouillage 1. Ainsi, lorsque la tige de verrouillage 1 est insérée dans la douille 2 dans une position de préassemblage, les secteurs 14 de la douille 2 s'encliquettent dans les logements 5 de la tige de verrouillage 1 tandis que les parois longitudinales 6 se logent dans les fentes 15 de la douille 2.

La douille 2 comprend également trois rainures 16 de guidage réalisées dans la paroi interne du corps 10 creux de la douille 2 depuis la tête 11. Les rainures 16 de guidage sont alignées avec les fentes 15. Elles sont destinées à recevoir les nervures d'expansion 7 de la tige de verrouillage 1 sans entraîner de déformation latérale de la douille 2 en position de préassemblage.

Lors de l'insertion de la tige de verrouillage 1 dans la douille 2 pour préassembler le dispositif, les rainures 16 de guidage permettent de positionner la tige de verrouillage 1 par rapport à la douille 2 de sorte que les parois longitudinales 6 de la tige de verrouillage 1 soient alignées avec les fentes 15 de la douille 2 et que les logements 5 de la tige de verrouillage 1 soient centrés par rapport aux secteurs 14 de la douille 2, comme illustré sur la figure 1.

De plus, les rainures 16 de guidage sont réalisées de sorte que la tige de verrouillage 1 puisse être insérée dans la douille 2 sans que les nervures d'expansion 7 n'exercent de force latérale sur la paroi interne du corps 10 de la douille 2.

D'autre part, comme illustré sur les figures 1, 2a et 3b, la tige de verrouillage 1 comprend un premier repère R1 sur la surface d'appui 8 de la tête 3 et la douille 2 comprend second repère R2 sur la tête 11. Ces deux repères sont positionnés de manière à être alignés avec l'axe du dispositif de fixation lorsque le dispositif de fixation est en position active de verrouillage.

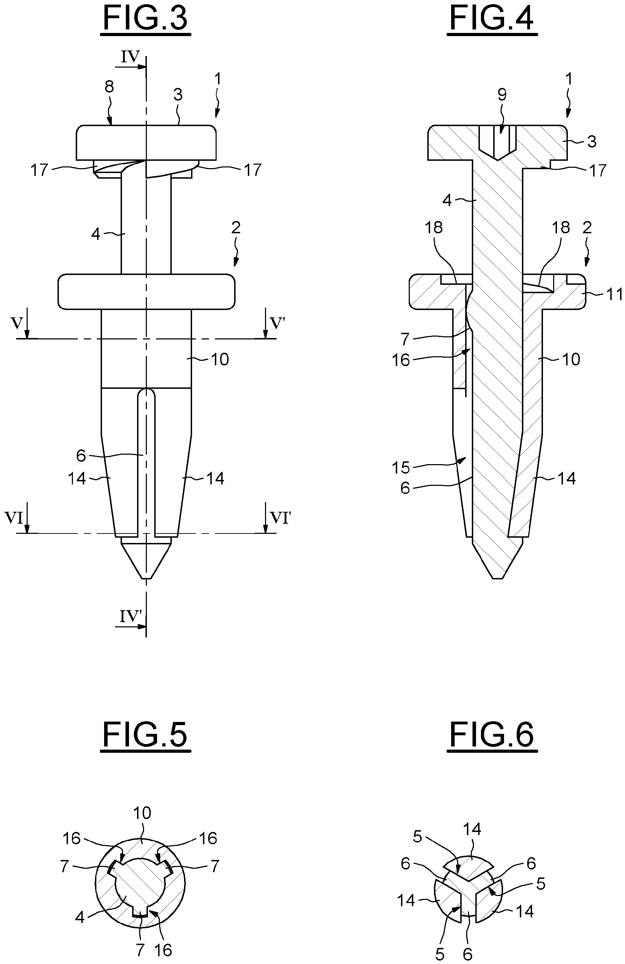

Sur la figure 3 est représentée une vue selon la hauteur d'un dispositif de fixation selon le premier mode de réalisation, dans une position de préassemblage.

Sur cette figure, on peut observer que la tête 3 de la tige de verrouillage 1 est pourvue de rampes 17 hélicoïdales de désengagement de la tige de verrouillage 1, de la position active de verrouillage à l'opposée de la surface d'appui 8. Ces rampes 17 sont destinées à coopérer avec des rampes complémentaires 18, illustrées sur la figure 2b, réalisées dans la tête 11 de la douille 2 pour permettre le désengagement de la tige de verrouillage 1 de la position active de verrouillage. Les rampes 17 et les rampes complémentaires 18 constituent des cames et sont réalisées de manière à déplacer axialement la tige de verrouillage 1 lors de leur rotation mutuelle.

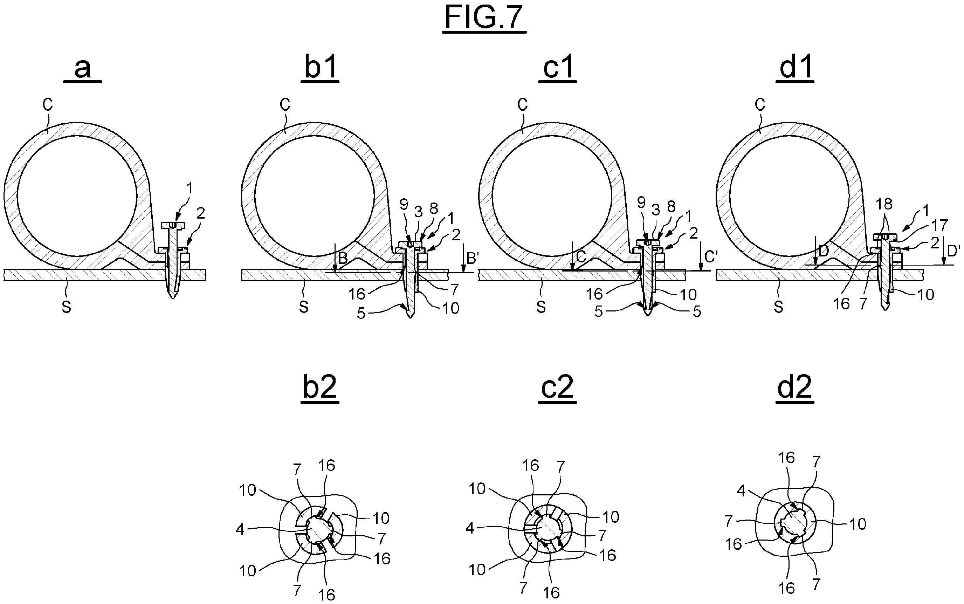

De plus, les rampes 17 et les rampes complémentaires 18 sont réalisées de manière à constituer également des butées complémentaires de rotation. Ainsi, lorsque le dispositif est engagé en position active de verrouillage par une rotation de la tige de verrouillage 1 par rapport à la douille 2 alors que les rampes 17 sont en contact avec les rampes complémentaires 18, la tige de verrouillage peut être pivotée uniquement jusqu'à une position active de verrouillage correspondant à une position dans laquelle les nervures d'expansion 7 sont en contact avec la paroi interne du corps 10 de la douille 2, déformant latéralement la douille 2, comme cela sera décrit par la suite en référence à la figure 7.

Une fois en position active de verrouillage, la tête 3 de la tige de verrouillage 1 est en contact avec la tête 11 de la douille 2.

Lorsque le dispositif est en position active de verrouillage, la rotation est donc bloquée dans un sens. Si une rotation est appliquée dans l'autre sens, c'est-à-dire une rotation pour sortir de la position active de verrouillage pour ramener les nervures d'expansion 7 au niveau de rainures de guidage 16 correspondantes, les rampes 17 et 18 coopèrent de manière à provoquer un déplacement axial vers le haut de la tige de verrouillage 1 par rapport à la douille 2, désengageant la tige de verrouillage 1 de la douille 2. La tête 3 de la tige de verrouillage 1 n'est alors plus en contact avec la tête 11 de la douille 2.

Sur les figures 4 à 6 ont été représentées des vues en coupes du dispositif de fixation de la figure 4 respectivement selon les plans de coupe IV-IV', V-V' et VI-VI' .

Sur les figures 4 et 5, on peut ainsi observer qu'en position de préassemblage, les nervures d'expansion 7 insérées dans les rainures 16 de guidage n'appliquent aucune force de déformation latérale à la douille 2.

Sur la figure 6, on peut observer la forme des secteurs 14 épousant celle des logements 5 séparés par les parois longitudinales 6.

Sur la figure 7 a été représenté un synoptique de l'installation du dispositif de fixation de la figure 1 pour fixer un collier de serrage C sur un support S.

Pour fixer le collier de serrage C sur le support S à l'aide d'un dispositif de fixation selon le premier mode de réalisation, on introduit le dispositif de fixation déjà préassemblé dans les orifices coaxiaux du collier de serrage C et du support S, comme illustré à l'étape *a* de la figure 7.

Puis un effort axial est appliqué sur la surface d'appui 8 de la tige de verrouillage 1 de manière à insérer la tige de verrouillage 1 dans la douille 2 jusqu'à ce que les rampes 17 et 18 rentrent en contact.

On fait alors tourner la tige de verrouillage 1 à l'aide, par exemple, d'un tournevis inséré dans l'évidement 9 jusqu'à ce que la rotation soit bloquée en butée par les rampes 17 et 18. Dans cette configuration illustrée à l'étape *b1* de la figure 7, le dispositif de fixation se trouve en position active de verrouillage dans laquelle les nervures d'expansion 7 se situent en dehors des rainures de guidages 16, en contact avec les parois internes du corps 10 de la douille 2. Comme illustrée à l'étape b2 de la figure 7 qui représente une vue en coupe selon le plan de coupe B-B', les nervures d'expansion 7 déforment ainsi latéralement la douille 2 de manière à appliquer une force d'expansion latérale maintenant le dispositif de fixation dans le support S.

Les déformations latérales de la douille 2 sont réalisées dans une zone de déformation située au niveau du support S seulement, maintenant la pièce intacte et libre de toute déformation.

Pour enlever le dispositif de fixation maintenant le collier de serrage C sur le support, il convient d'appliquer une rotation contraire à la précédente (étape c1). Les rampes 17 et les rampes complémentaires 18 provoquent par conséquent un déplacement axial vers le haut de la tige de verrouillage 1 par rapport à la douille 2. La tête 3 n'est donc plus en contact avec la tête 11 de la douille 2.

La rotation contraire est appliquée jusqu'à ce que les nervures d'expansion 7 soient alignées avec les rainures de guidage 16, puis la tige de verrouillage est déplacée axialement jusqu'à la position initiale de préassemblage (étapes d1 et d2).

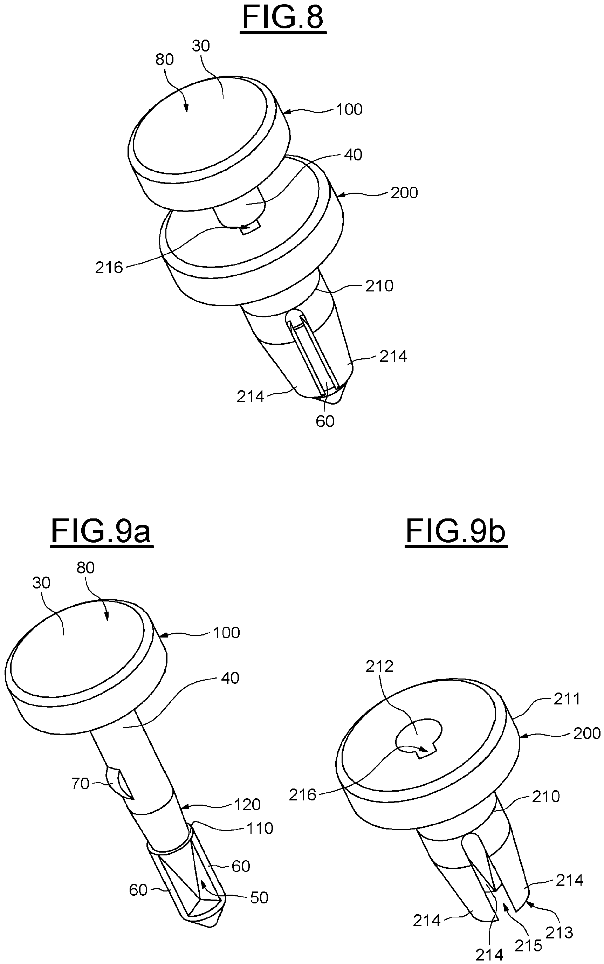

Sur la figure 8 est illustré en perspective un dispositif de fixation selon un second mode de réalisation. Le dispositif de fixation comprend une tige de verrouillage 100 insérée dans une douille 200 respectivement illustrées séparément sur les figures 9a et 9b. Le dispositif de fixation est représenté sur cette figure dans une position de préassemblage.

Dans ce mode de réalisation, la tige de verrouillage 100 comprend une tête 30 et une tige 40 s'étendant à partir de la tête 30. Comme dans le premier mode de réalisation, l'extrémité libre de la tige 40 comprend trois logements 50 distribués sur la circonférence de la tige 40. Les logements 50 sont séparés par des parois longitudinales 60 et sont destinés à maintenir par encliquetage le dispositif de fixation en position de préassemblage.

Les logements 50, les parois longitudinales 60 et les secteurs 214 avec les fentes 215 forment ainsi des butées complémentaires de préassemblage permettant d'empêcher que la tige de verrouillage 100 soit retirée de la douille 200 une fois le dispositif en position de préassemblage.

La douille 200 comprend quant à elle un corps 210 cylindrique creux et une tête 211. Cette tête 211 offre une surface d'appui à la tête 30 de la tige de verrouillage 100 lorsque le dispositif de fixation est en position active de verrouillage. La tête 30 comprend également une surface d'appui 80 permettant l'application d'un effort axial sur la tête 30 pour l'engager dans la douille 200.

Le corps 210 de la douille 200 comprend en outre, à une extrémité libre 213 opposée à la tête 211, des fentes 215 délimitant des secteurs 214 radialement déformables. Comme on le voit sur la figure, la douille 200, y compris la tête 211, est pourvue d'un passage axial 212 destiné à l'insertion de la tige de verrouillage 100. La douille 200 comprend encore une rainure 216 de guidage réalisée dans la paroi interne du corps 210 creux de la douille 200 depuis l'extrémité d'entrée 212. La rainure 216 de guidage est destinée à recevoir une nervure d'alignement 70 réalisée sur la tige 40 entre la tête 30 et les logements 50. Lors de l'insertion de la tige de verrouillage 100 dans la douille 200 pour préassembler le dispositif, la rainure 216 de guidage et la nervure de guidage 70 permettent de positionner la tige de verrouillage 100 par rapport à la douille 200 de manière à ce que les parois longitudinales 60 soient alignées avec les fentes 215 et que les logements 50 soient centrés par rapport aux secteurs 214.

La tige de verrouillage 100 comprend un épaulement 110 sur une portion de la tige 40 située entre la nervure d'alignement 70 et les logements 50. L'épaulement est destiné à coopérer avec l'extrémité libre 213 de la douille 200 pour maintenir le dispositif de fixation dans la position active de verrouillage. En effet, une fois l'extrémité libre 213 de la douille 200 engagée avec l'épaulement 110 de la tige de verrouillage 100, le dispositif ne peut plus être désengagé de la position active de déverrouillage sans être détérioré.

De plus, la tige de verrouillage 100 comprend au moins une empreinte 120 dimensionnée pour déformer latéralement l'extrémité libre 213 de la douille 200 lorsque le dispositif est déplacé de la position de préassemblage vers la position active de verrouillage. L'empreinte 120 est adjacente à l'épaulement 110 et conformée de manière à partiellement recevoir les secteurs 214 de l'extrémité libre 213 de la douille 200 de manière à déformer latéralement la douille 200 et ainsi exercée une force d'expansion. Plus particulièrement, la forme de l'empreinte possède une section croissante à partir de la butée 110.

La déformation de la douille est ainsi réalisée au niveau du support seulement, maintenant la pièce intacte et libre de toute déformation.

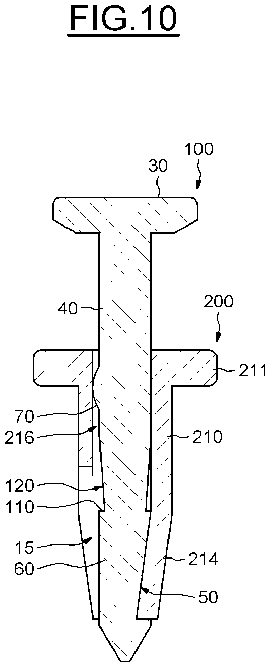

Sur la figure 10 est représentée une vue en coupe longitudinale selon un plan comprenant la nervure d'alignement 70 et l'axe de la tige 40 d'un dispositif de fixation dans une position de préassemblage selon le second mode de réalisation.

On peut observer sur la figure 10, qu'en position de préassemblage, la nervure d'alignement 70 insérée dans la rainure 216 de guidage n'applique aucune force de déformation latérale à la douille 200.

On peut également observer plus clairement sur cette figure que l'empreinte 120 est moins profonde que les logements 50. Les secteurs 214 sont donc déformés par rapport à leur position originale adoptée lorsque la douille est seule ou lorsque le dispositif de fixation est en position de préassemblage. Ces déformations latérales induites par les empreintes 120 sur les secteurs 214 lorsque le dispositif de fixation est en position active de verrouillage permet de maintenir le dispositif de fixation dans le support S et, par conséquent, de fixer le collier de serrage C au support S.

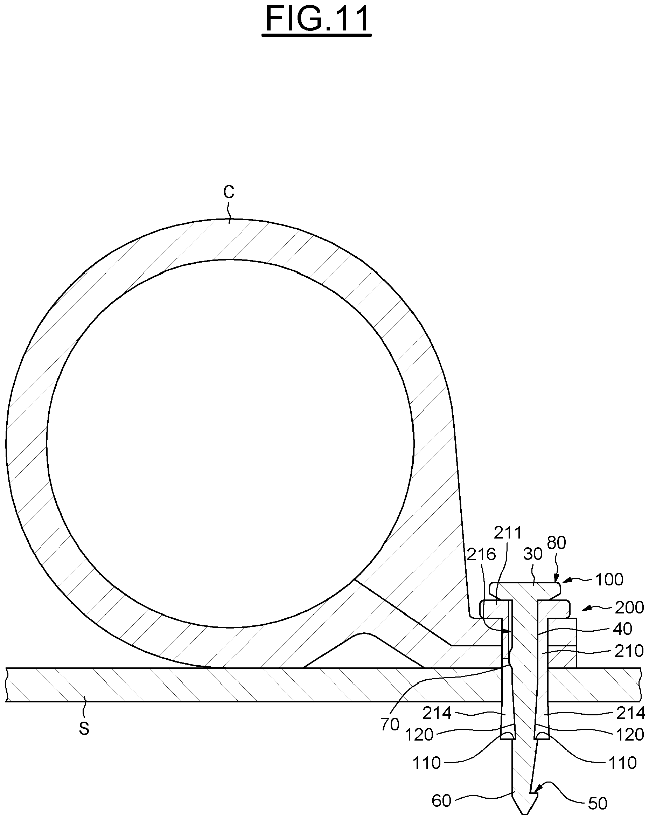

Sur la figure 11 a été représenté le dispositif de fixation de la figure 8 en position active de verrouillage.

Dans une première étape, le dispositif de fixation déjà préassemblé est introduit dans les orifices coaxiaux du collier de serrage C et du support S. Puis un effort axial est appliqué sur la tête de la tige de verrouillage 100 de manière à insérer la tige de verrouillage 100 dans la douille 200 jusqu'à la position active de verrouillage.

Dans cette position, les secteurs 214 sont engagés dans les empreintes 120. Les empreintes 120 déforment alors latéralement les secteurs 214 induisant une force d'expansion radiale, maintenant de ce fait le dispositif de fixation dans le support S et, par conséquent, fixant le collier de serrage C entre la tête 211 de la douille 2 et le support S, la tête 211 étant maintenue en position par la tête 30 de la tige de verrouillage 100.

## Revendications

1. Dispositif de fixation d'une pièce (C) sur un support (S), comprenant une douille (2, 200) destinée à venir s'engager dans des orifices coaxiaux pratiqués dans la pièce (C) et dans le support (S), et une tige de verrouillage (1, 100) axialement déplaçable dans la douille (2, 200) entre une position de préassemblage du dispositif et une position active de verrouillage dans laquelle la tige de verrouillage (1, 100) déforme latéralement la douille (2, 200), la tige de verrouillage (1, 100) et la douille (2, 200) comprenant des butées complémentaires aptes à maintenir la tige de verrouillage (1, 100) dans la douille (2, 200) en position de préassemblage.

2. Dispositif selon la revendication 1, dans lequel la tige de verrouillage (1, 100) et la douille (2, 200) sont réalisées en matériau thermoplastique.

3. Dispositif selon l'une des revendications 1 ou 2, dans lequel la tige de verrouillage (1, 100) comprend au moins un logement (5) dans lequel s'encliquette une portion d'extrémité libre (13) de la douille (2, 200) lors du préassemblage.

4. Dispositif selon la revendication 3, dans lequel l'extrémité libre (13) de la douille (2, 200) est fendue et comporte trois secteurs (14) radialement déformables venant s'encliqueter lors du préassemblage dans trois logements (5) correspondants pratiqués dans la tige de verrouillage (1, 100).

5. Dispositif selon la revendication 4, dans lequel les logements (5) sont séparés par des parois longitudinales (6) qui s'engagent dans les fentes (15) de la douille (2, 200).

6. Dispositif selon la revendication 5, dans lequel la tige de verrouillage (1) comprend au moins une nervure d'expansion (7) apte à déformer latéralement la douille (2) dans la position active de verrouillage.

7. Dispositif selon la revendication 6, dans lequel la douille (2) comprend au moins une rainure (16) de guidage apte à recevoir ladite au moins une nervure d'expansion (7) sans entraîner de déformation latérale de la douille (2) dans une position de préassemblage, la rainure (16) de guidage étant réalisée dans la paroi interne de la douille (2) depuis une extrémité d'entrée (12) de la douille (2), distincte de l'extrémité libre (13) de la douille (2).

8. Dispositif selon l'une des revendications 6 ou 7, dans lequel la tige de verrouillage (1) et la douille (2) comprennent des moyens de rotation complémentaires permettant de faire pivoter ladite au moins une nervure d'expansion (7) lors du déplacement de la tige de verrouillage (1) de la position de préassemblage à la position active de verrouillage.

9. Dispositif selon la revendication 8, dans lequel les moyens de rotation comprennent des surfaces hélicoïdales pratiquées dans la tige de verrouillage (1), d'une part, et dans la douille (2), d'autre part.

10. Dispositif selon la revendication 9, dans lequel la tige de verrouillage (1) et la douille (2) comprennent des butées complémentaires (17, 18) aptes à bloquer la rotation de la tige de verrouillage (1) dans la position active de verrouillage.

11. Dispositif selon l'une des revendications 1 à 5, dans lequel la tige de verrouillage (100) comprend un épaulement (110) destiné à coopérer avec une portion de l'extrémité libre (213) de la douille (200) pour maintenir la tige de verrouillage (1) dans la position active de verrouillage.

12. Dispositif selon la revendication 11, dans lequel la tige de verrouillage (100) comprend au moins une empreinte de réception (120) dimensionnée pour déformer latéralement la portion d'extrémité libre (213) de la douille (200) lorsque la tige de verrouillage (1) est en position active de verrouillage.

13. Dispositif selon l'une des revendications 11 ou 12, dans lequel la tige de verrouillage (100) comprend une nervure d'alignement (70) coopérant avec une rainure d'alignement (216) pratiquée dans la paroi interne de la douille (200) de manière à maintenir en rotation la tige de verrouillage (100) par rapport à la douille (200) lorsque la tige de verrouillage (100) est dans la position de préassemblage.
